Europäisches Patentamt

European Patent Office

Office européen des brevets

(19)

(11) Publication number: **0 034 229**

A1

## EUROPEAN PATENT APPLICATION

(12)

(21) Application number: **80300464.7**

(22) Date of filing: **19.02.80**

(51) Int. Cl.³: **G 05 B 19/35**

(43) Date of publication of application:
26.08.81 Bulletin 81 34

(84) Designated Contracting States:
AT BE CH DE FR GB IT LU NL SE

(71) Applicant: **FUJITSU FANUC LIMITED**
5-1, Asahigaoka, 3-chome
Hino-shi, Tokyo 191(JP)

(72) Inventor: Kohzai, Yoshinori
16-3, Hirayama 2-chome
Hino-shi Tokyo(JP)

(72) Inventor: Komiya, Hidetsugu
17-20, Asahigaoka 1-chome Hino-shi
Tokyo(JP)

(72) Inventor: Amemiya, Yoichi
1552-3, Katakuro-cho Hachioji-shi
Tokyo 82-6 Tokyukatakuradai(JP)

(72) Inventor: Ikebe, Yo
10-19, Nozawa 3-chome
Setagaya-ku Tokyo(JP)

(72) Inventor: Ikebe, Jun
10-19, Nozawa 3-chome
Setagaya-ku Tokyo(JP)

(74) Representative: Bedggood, Guy Stuart et al,
Haseltine Lake & Co. Hazlitt House 28 Southampton
Buildings Chancery Lane
London WC2A 1AT(GB)

(54) Apparatus for, and methods of, controlling positioning of a movable part driven by a motor.

(57) The apparatus controls the position of the movable part (MC) driven by the motor (M) in dependence upon fed back positional information, from a position detector (R1, R2), indicative of the position of the part (MC) and in dependence upon motor velocity information, from a velocity detector (T1), and in accordance with commanded-position information, from a control unit (CONT), to bring the movable part (MC) to a desired position.

In addition, the motor (M) is driven in dependence upon a difference signal (output of adder AD5) which indicates any discrepancy between the motor velocity information (from T1) and the actual velocity of the movable part (MC) as derived by a detector (T2, R2 and FV) coupled to that part.

In this way the adverse effects of the vibrations of the movable part as the desired position is reached can be reduced to suppressed.

The method of controlling the position of the movable part (MC) also involves driving the motor (M) in dependence upon the difference signal.

FIG. 3

EP 0 034 229 A1

Croydon Printing Company Ltd.

-1-

Apparatus For, And Methods Of, Controlling
Positioning Of A Movable Part Driven By A
Motor.

This invention relates to apparatus for, and methods of, controlling positioning of a movable part driven by a motor.

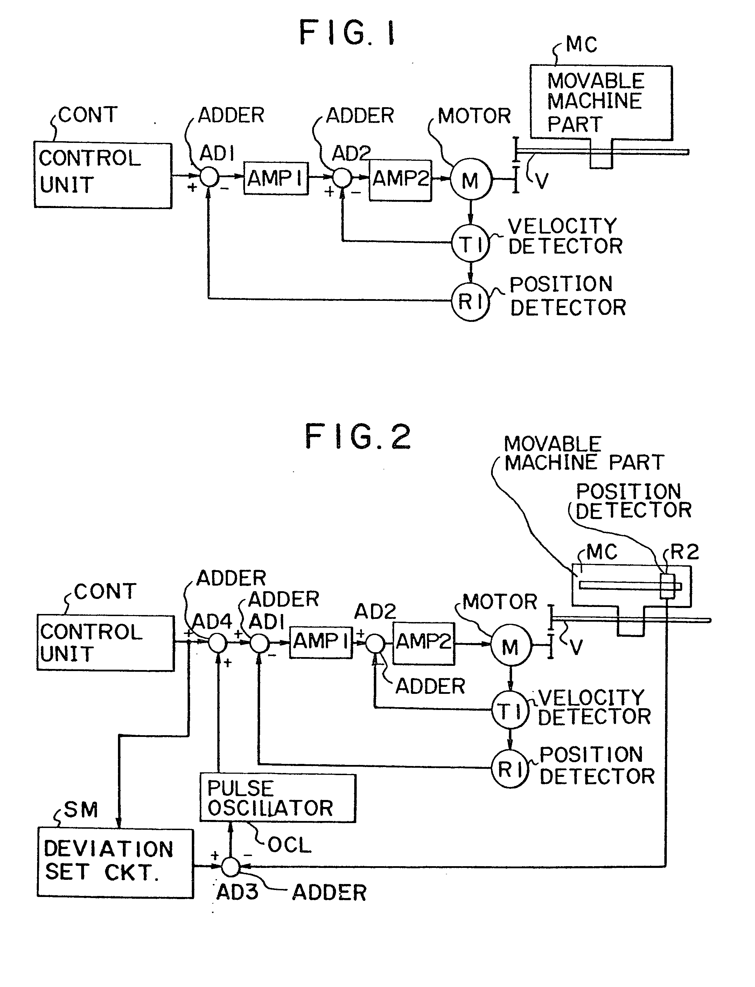

Positioning control apparatus for a numerical-controlled machine has been proposed which employs a closed loop type servomechanism for example as shown in Figure 1 of the accompanying drawings which is a schematic block diagram, illustrating principal parts of the position control apparatus. With the positioning control apparatus of Fig. 1, velocity information detected by a tachogenerator or like velocity detector T1 and positional information detected by a resolver or like position detector R1, both mounted on a motor M, are fed back in a control loop. The fed back velocity and positional informations are applied to adders AD1 and AD2, respectively. In adder AD1, a comparison is made between commanded positional information, as delivered from a control unit CONT, and detected positional information from the position detector R1, and the resulting difference signal is delivered as a velocity command to adder AD2 via an amplifier AMP1. In adder AD2, the velocity command and detected velocity information from the velocity detector T1 are compared, and the motor M is driven via a velocity amplifier AMP2 in such a manner as to reduce the difference between the velocity command and the detected velocity information to zero, whereby a feed screw V, driven by motor M, is driven to position a movable machine part MC to a desired position.

In such a proposed position control apparatus in which velocity feedback information is derived from a drive motor M, it is impossible to correct for vibrations of the machine system which can be produced by its various elements at the end of a positioning operation; therefore, accurate positioning may in some cases be impossible. With the use of an arrangement for position control in which velocity feedback information is derived directly from the mechanical system (which is driven by motor M), such vibration of the mechanical system can be suppressed. In general, however, when a mechanical system is included in a velocity feedback loop, various characteristics of the mechanical system have adverse effects upon a velocity control loop; for example, even in a steady state in which no velocity difference exists between the motor M and a movable machine part MC of the mechanical system which is driven by the motor, that is, when no vibration occurs, characteristics of the mechanical system are manifest in fed back information and can make the velocity control loop unstable.

It has also been proposed, in an attempt to prevent or correct for vibration of the mechanical system, to employ positioning control apparatus as depicted in Fig. 2 of the accompanying drawings which is a schematic block diagram. This apparatus includes another positional information feedback loop in addition to that shown in the apparatus of Fig. 1. In the Figure 2 apparatus, movement of the mechanical system is detected by a position detector R2 mounted on the movable machine part MC, and commanded positional information is applied to a deviation set circuit SM to detect the rotational angular position of the output shaft of the motor M, and then the kinds of detected positional information are compared in an adder AD3 to thereby detect any positioning error of the whole mechanical system. The error signal thus provided by adder AD3 is applied to a pulse oscillator OCL which, in dependence upon the error signal, delivers correcting pulses corresponding to the detected error. The correction pulses are delivered to an adder AD4, wherein they are added to the commanded positional information from the control unit CONT, thereby correcting the rotational angle of the motor M by an amount corresponding to the detected error. Since the error signal derived from the adder AD3 includes errors resulting from vibration of the mechanical system, it is possible theoretically to suppress vibration of the mechanical system. However, the apparatus of Figure 2 is intended, in general, primarily to correct position errors, such as backlash errors, pitch errors and so forth. The gain of the apparatus including position detector R2 is limited by the natural frequency of the mechanical system, so that in a case in which that natural frequency is low, the gain available for very small displacements is reduced and the response to such very small displacments as are involved in mechanical vibration or the like is essentially retarded, with the probable consequence of failure to suppress sufficiently such vibration. Moreover, the apparatus of Figure 2 involves the use of a deviation set circuit and hence may be disadvantageous economically.

According to the present invention there is provided position control apparatus, for controlling positioning of a movable part driven by a motor, comprising an arrangement for providing and feeding back positional information indicative of the position of the part and for detecting the velocity of the motor and feeding back motor velocity information, and wherein the motor is driven in accordance with commanded-position information and in dependence upon the fed back positional and motor velocity information, characterised in that the apparatus further comprises means for deriving the actual velocity of the movable part, and means for providing a difference signal indicative of any discrepancy between the derived velocity of the movable part and the motor velocity information, and in that the motor is driven in dependence upon that difference signal also.

According to the present invention there is also provided a method of controlling the position of a movable part driven by a motor, by

providing and feeding back positional information indicative of the position of the part;

detecting the velocity of the motor and feeding back motor velocity information;

driving the motor in accordance with commanded position information and in dependence upon the fed back positional and motor velocity information;

characterised by

deriving the actual velocity of the movable part,

providing a difference signal indicative of any discrepancy between the derived velocity of the movable part and the motor velocity information; and

driving the motor in dependence upon that difference signal also.

Apparatus embodying this invention can provide positioning control for a numerical-controlled machine such that vibration of a mechanical system of the machine can be suppressed or reduced to provide for enhanced accuracy in positioning.

Apparatus embodying this invention can provide positioning control for a numerical-controlled machine in which vibration of a mechanical system of the machine occurring at the moment of completion of a positioning operation is detected and a motor driving the mechanical system is controlled in a manner such as to suppress the vibration, thereby to provide enhanced accuracy in positioning. Briefly, such an embodiment of the present invention comprises a servo system which uses fed back detected positional information from a position detector and detected velocity information from a velocity detector which detects the velocity of a motor, and additionally uses means for detecting the velocity of a movable machine part. The difference between the detected velocity information relating to the movable machine part and detected velocity information relating to the motor is fed back to control the motor.

Reference is made, by way of example, to the accompanying drawings, in which:-

Figs. 1 and 2 are, as mentioned above, schematic block diagrams of proposed positioning systems; and

Figs. 3, 4 and 5 are schematic block diagrams illustrating respective embodiments of this invention.

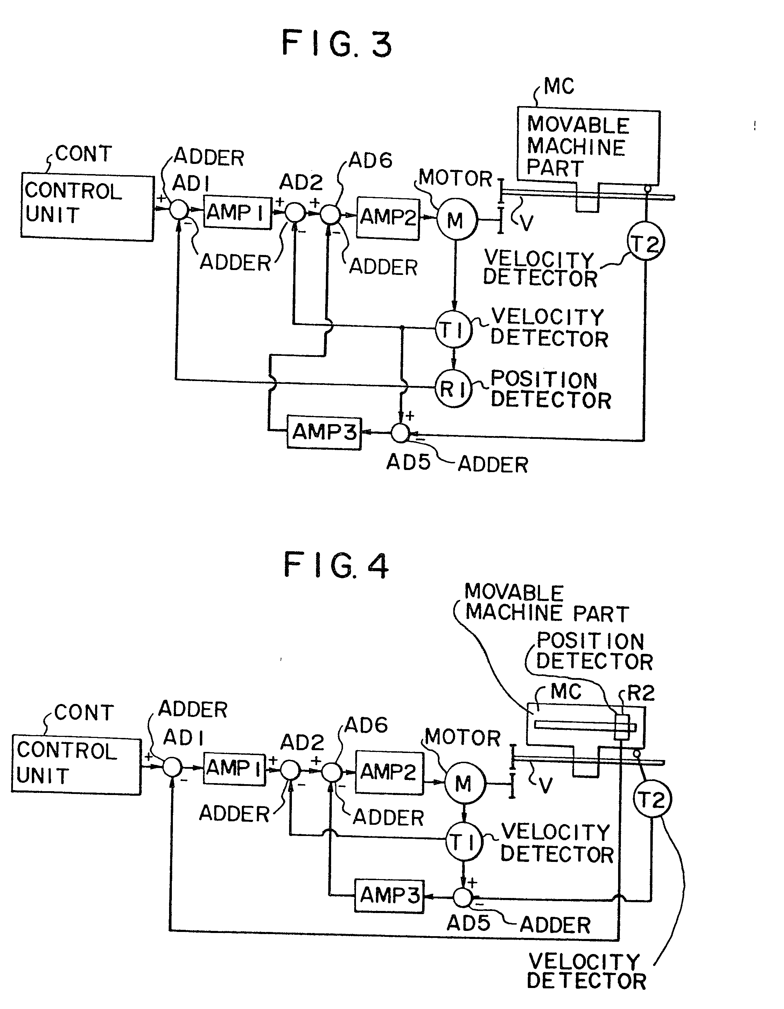

In Fig. 3, there is illustrated an embodiment of this invention which incorporates a positioning control loop in which position and velocity feedback information is obtained from the motor M. Reference character T2 indicates a velocity detector coupled to the movable machine part MC; AD5 and AD6 are adders; and AMP3 is an amplifier. Parts of the apparatus of Fig. 3 corresponding to parts of the apparatus of Fig. 1 are marked with the same reference characters as are used in Fig. 1.

In adder AD1 commanded positional information from control unit CONT is compared with detected positional information from position detector R1, and the resulting difference signal is employed as a velocity command. This velocity command and detected velocity information from the velocity detector T1 are compared in adder AD2, and (ignoring adder AD6 for the moment) the motor M is driven via velocity amplifier AMP2 so that the difference between velocity command and velocity information from T1 is reduced to zero. Such operations are carried out in the same manner as in the proposal of Figure 1.

The velocity detector T2 comprises, for example, a combination of a tachogenerator and a rack and pinion, a combination of an inductosyn or like linear position detector and a frequency-voltage converter, or the like, and is mounted directly on the side of (is directly coupled with) a numerical-controlled machine for example. The velocity detector T2 is to detect the velocity of movement of movable machine part MC, and detected velocity information is applied to adder AD5, wherein it is compared with detected velocity information from the velocity detector T1 which detects the velocity of revolution of the motor M, and a detected difference signal provided. The difference signal is amplified by amplifier AMP3 and delivered to adder AD6 for comparison with the output signal from adder AD2. The velocity amplifier AMP2 drives the motor to position the movable machine part MC.

At the moment of completion of a positioning operation, detected positional information from the position detector R1 and the commanded positional information from the control unit CONT become equal to one another and the output signal from the adder AD1 is reduced to zero, thus stopping rotation of the motor M. Accordingly, detected velocity information from the velocity detector T1 coupled with the motor M becomes zero. At this time, if vibration occurs in the movable machine part MC, detected velocity information corresponding to this vibration is output from velocity detector T2, and in the adder AD5, the detected velocity information from the velocity detectors T1 and T2 are compared, and the resulting difference signal is delivered to the adder AD6. Consequently the motor M is driven by an output from the velocity amplifier AMP2 and in this case the motor M is controlled so that the difference signal from the adder AD5 is reduced to zero, thus to suppress the vibration of themovable machine part MC. By suppressing or reducing the vibration of the mechanical system in this way, the positioning operation can be rapidly completed, and more accurate positioning ensured. This embodiment of the present invention requires only the additional provision of velocity detector T2, amplifier AMP3 and adders AD5 and AD6, and hence is not complicated in construction.

As will be appreciated from the arrangement shown in Fig. 3, only when there is a difference in velocity between the movable machine part MC and the motor M is the difference fed back to cause, ultimately, the suppression of that difference. At a steady velocity at which no velocity difference is present between the movable machine part MC and the motor M, only ordinary velocity feedback is effected from the motor M, so that the likelihood of various characteristics of the mechanical system exerting adverse effects on the control loop is eliminated. Also, in the case in which the natural frequency of the machine is low, the responsiveness of the velocity feedback loop can be raised above the natural frequency of the machine, therefore, the gain of the position feedback loop can be selected to be large, and response to very small displacements improved to a sufficient degree.

Fig. 4 illustrates in block form another embodiment of this invention as applied to a positioning control arrangement in which ordinary position feedback information is derived from a position detector R2, such as an inductosyn or the like, disposed directly on the side of (directly coupled with) the machine. In Fig. 4, parts corresponding to those in Fig. 3 are identified by the same reference characters. As will be obvious from Fig. 4, the present embodiment is similar in construction and in operation to the embodiment of Fig. 3 except in that the position detector R2 is mounted on the movable machine part MC; therefore, detailed description will not be repeated. Generally, in view of the fact that the positioning accuracy is rather enhanced by detecting the positional information from the machine side rather than the motor side, it might be said that the present embodiment can offer higher positioning accuracy than the system of Fig. 3.

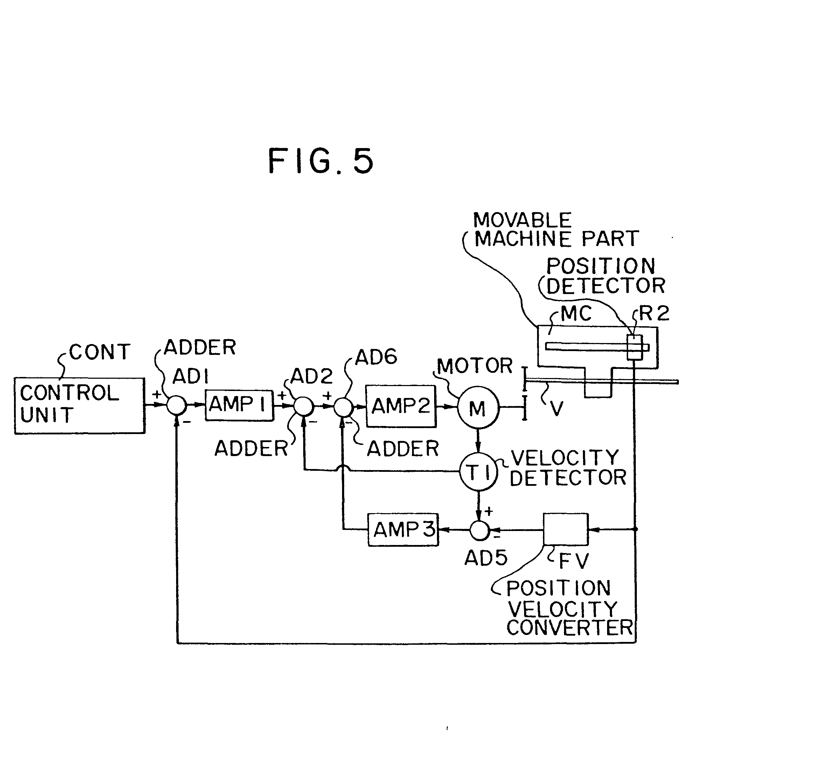

Fig. 5 illustrates in block form a further

-8-

embodiment of this invention, in which the velocity detector T2 used in Fig. 4 is omitted and positional information from position detector R2 mounted on the machine side is processed to obtain velocity information relating to movable machine part MC.

A position-velocity converter FV receives as input detected positional information from position detector R2 and calculates and outputs a signal representing the velocity of movement of the movable machine part MC at that time. The position-velocity converter FV comprises a shaping circuit, for waveform shaping of a detected pulse signal from the position detector R2, which is for example, an inductosyn or the like, into a constant pulse-width signal, and a low-pass filter for receiving the output signal from the shaping circuit. Velocity information derived from position-velocity converter FV is applied to adder AD5, and then the same operations as those effected in the embodiments of Figs. 3 and 4 are performed, whereby vibration of the mechanical system can be suppressed or reduced to ensure more accurate positioning. In the present embodiment, the position detector R2 is used for detecting both position and the velocity information, providing an advantage in that the arrangement on the machine side can be simplified.

As has been described above, in an embodiment of the present invention, the difference between the velocity of the movable machine part and the motor velocity is fed back to the servo system of a positioning control loop for a numerical-controlled machine, in addition to ordinary velocity feedback from the motor and / position feedback from the motor or the machine side, and vibration of the mechanical system which is produced by various elements of the mechanical system at the end of the positioning operation can be reduced or suppressed; thus, more accurate positioning can be performed. Further, when positioning operations are proceeding at a steady velocity at which no velocity difference exists between the movable machine part and the motor, only ordinary velocity feedback from the motor is effected, to eliminate the likelihood of the control loop being adversely affected by various characteristics of the mechanical system. Accordingly, by applying this invention to positioning in a numerical-controlled machine, accurate positioning can be achieved with an economical construction.

Positioning control apparatus embodying this invention has a servo system provided with a position feedback system for detected positional information and a velocity feedback system for detected velocity information of a motor, and the motor is driven by the servo system in accordance with commanded positional information to position a movable part driven by the motor, for example a part of a numerical-controlled machine. The difference between detected information relating to the velocity of the movable part and the detected motor velocity information is fed back to the control input side of the motor to control the motor to reduce or suppress vibration of the movable part at the completion of positioning operations.

CLAIMS

1. Position control apparatus, for controlling positioning of a movable part driven by a motor, comprising an arrangement for providing and feeding back positional information indicative of the position of the part and for detecting the velocity of the motor and feeding back motor velocity information, and wherein the motor is driven in accordance with commanded-position information and in dependence upon the fed back positional and motor velocity information, characterised in that the apparatus further comprises means for deriving the actual velocity of the movable part, and means for providing a difference signal indicative of any discrepancy between the derived velocity of the movable part and the motor velocity information, and in that the motor is driven in dependence upon that difference signal also.

2. Apparatus as claimed in claim 1, wherein the motor velocity is detected by a velocity detector coupled with the motor, and the actual velocity of the movable part is derived from a velocity detector coupled with that part.

3. Apparatus as claimed in claim 1, wherein the motor velocity is detected by a velocity detector coupled with the motor, and the velocity of the movable part is derived by processing a position signal provided by a position detector coupled with the movable part.

4. Apparatus as claimed in any of claims 1 to 3, wherein the positional information is provided by a position detector coupled to the motor.

5. Apparatus as claimed in any of claims 1 to 3, wherein the positional information is provided by a position detector coupled to the movable part.

6. Apparatus as claimed in claim 5, when read as appended to claim 3, wherein the positional information is provided by the said position signal.

7. Apparatus as claimed in any preceding claim, wherein the motor and the movable part are components of a
numerical-controlled machine.

8.    A numerical-controlled machine including
apparatus as claimed in any of claims 1 to 7.

9.    A method of controlling the position of a movable
part driven by a motor, by

providing and feeding back positional information
indicative of the position of the part;

detecting the velocity of the motor and feeding
back motor velocity information;

driving the motor in accordance with commanded
position information and in dependence upon the
fed back positional and motor velocity information;

characterised by

deriving the actual velocity of the movable part,

providing a difference signal indicative of any
discrepancy between the derived velocity of the movable
part and the motor velocity information; and

driving the motor in dependence upon that
difference signal also.

0034229

1/3

FIG. 1

FIG. 2

# FIG. 3

# FIG. 4

# FIG. 5

0034229

## European Patent Office

**EUROPEAN SEARCH REPORT**

Application number

EP 80 30 0464

| | DOCUMENTS CONSIDERED TO BE RELEVANT | | | CLASSIFICATION OF THE APPLICATION (Int. Cl.³) |
|---|---|---|---|---|
| Category | Citation of document with indication, where appropriate, of relevant passages | Relevant to claim | | |
| X | <u>DE - B - 2 354 655</u> (SIEMENS) <br> * Columns 1,2; figures * | 1,2,9 | | G 05 B 19/35 |
| X | CONTROL ENGINEERING, vol. 9, no. 1, January 1962, pages 51-56 New York, U.S.A. S.M. SHINNERS: "Minimizing Servo Load Resonance Error" <br> * Pages 51-53 * | 1,3,9 | | |
| | <u>DE - A - 2 758 512</u> (GENERAL ELEC-TRIC) <br> * Page 4; page 8, line 18 - page 10, line 13; figure 1 * | 1,3,4, 6-8 | | **TECHNICAL FIELDS SEARCHED (Int. Cl.³)** <br><br> G 05 D  3/00 <br> G 05 B 19/35 <br> 19/33 |
| | <u>CH - A - 351 015</u> (SOCIETE GENE-VOISE D'INSTRUMENTS DE PHYSIQUE) <br> * Page 2, lines 3-48; figure 4 * | 5 | | |
| A | <u>US - A - 3 358 201</u> (G.H. JONES) <br> * Column 1, line 64 - column 2, line 13; column 3, line 8 - column 6, line 44; figure 1 * | 1 | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 31-10-1980 | CORNILLIE |

EPO Form 1503.1  06.78